# FASCICULE DE BREVET EUROPEEN

(11) **EP 3 126 155 B1**
(45) Date de publication et mention de la délivrance du brevet: **24.07.2019**
(21) Numéro de dépôt: 15713518.7
(22) Date de dépôt: 02.04.2015
(51) Int. Cl.: B60C 1/00, C08L 9/06

(54) **COMPOSITION DE CAOUTCHOUC COMPRENANT UNE RESINE DICYCLOPENTADIENE AROMATIQUE**
KAUTSCHUKZUSAMMENSETZUNG MIT EINEM AROMATISCHEN DICYCLOPENTADIENHARZ
RUBBER COMPOSITION COMPRISING AN AROMATIC DICYCLOPENTADIENE RESIN

(30) Priorité: 03.04.2014 FR 1452952
(43) Date de publication de la demande: 08.02.2017
(73) Titulaire: Compagnie Générale des Etablissements Michelin, 63000 Clermont-Ferrand (FR)
(72) Inventeur: BELIN, Cécile, F-63040 Clermont-Ferrand Cedex 9 (FR); GONCALVES, Olivier, F-63040 Clermont-Ferrand Cedex 9 (FR)
(74) Mandataire: Cohen, Sylvia
(86) Numéro de dépôt international: PCT/EP2015/057366
(87) Numéro de publication internationale: WO 2015/150542

(56) Documents cités:
- EP-A1- 1 077 229
- US-A- 3 919 130
- US-A- 4 012 344
- DATABASE WPI Week 200948 Thomson Scientific, London, GB; AN 2009-L47609 XP002736793, & JP 2009 155526 A (YOKOHAMA RUBBER CO LTD) 16 juillet 2009 (2009-07-16)

## Description

La présente invention se rapporte aux compositions de caoutchoucs diéniques renforcées par une charge organique, destinées à la fabrication de pneumatiques ou de produits semi-finis pour pneumatiques, notamment aux bandes de roulement de ces pneumatiques, en particulier utilisées pour le Génie Civil.

On cherche sans cesse à améliorer les propriétés des pneumatiques notamment de ceux utilisés pour le Génie Civil et en particulier leur résistance à l'usure.

Une telle amélioration est généralement obtenue par l'utilisation en bande de roulement, de charges renforçantes plus fines ou en augmentant le taux de charges renforçantes. Malheureusement quelle que soit la solution adoptée, celle-ci engendre, en particulier pour les pneumatiques Génie Civil de très grandes dimensions, de vraies difficultés. En effet l'augmentation de taux de charges renforçantes entraîne de problèmes d'échauffements internes importants de la ceinture de renforcement qui peuvent conduire à une auto-combustion du mélange et une dégradation du pneumatique.

Par ailleurs l'utilisation de charges renforçantes plus fines nécessite l'emploi de plastifiants afin de pallier aux difficultés de mise en oeuvre, processabilité, de telles charges. Or la présence de plastifiants dans ces compositions provoque une dégradation de certaines propriétés mécaniques des compositions telle que les propriétés limites (déformation, énergie à la rupture).

La demanderesse a découvert de façon surprenante que l'utilisation de charges renforçantes fines associées à un type de résine plastifiante spécifique permettait de pallier l'ensemble des inconvénients précités.

L'invention a donc pour objet une composition de caoutchouc à base d'au moins un copolymère de butadiène-styrène, SBR, le SBR ayant un taux supérieur ou égal à 50 parties pour cent parties d'élastomère, pce, une charge renforçante comprenant majoritairement du noir de carbone de surface spécifique CTAB supérieure ou égale à 90 m²/g, caractérisé en ce que la composition comprend une résine plastifiante dicyclopentadiène aromatique comprenant essentiellement des motifs styrène, éthylène et dicyclopentadiène, avec un taux allant de 2 à 40 pce, la composition contenant moins de 5 pce d'un autre plastifiant.

De préférence le taux de SBR de la composition de caoutchouc va de 60 à 100 pce, et plus préférentiellement de 80 pce à 100 pce.

Selon un mode de réalisation de l'invention, le SBR est utilisé en coupage avec au moins un autre élastomère diénique, en particulier choisi dans le groupe constitué par les polybutadiènes, les polyisoprènes synthétiques, le caoutchouc naturel, les copolymères de butadiène, les copolymères d'isoprène et les mélanges de ces élastomères et plus particulièrement avec du caoutchouc naturel ou du polyisoprène de synthèse.

De façon préférentielle, le noir de carbone présent dans la composition de caoutchouc représente plus de 60 % en masse du total de la charge renforçante, et plus préférentiellement encore plus de 90% en masse du total de la charge renforçante.

Avantageusement, la résine plastifiante dicyclopentadiène aromatique comprend au moins 90% en masse de motifs choisis parmi les motifs styrène, éthylène et dicyclopentadiène.

L'invention concerne également un pneumatique comprenant une composition de caoutchouc telle que décrite précédemment, ainsi qu'une bande de roulement comprenant une composition de caoutchouc telle que décrite précédemment.

### I. MESURES ET TESTS UTILISES

Les compositions de caoutchouc sont caractérisées, après cuisson, comme indiqué ci-après.

### Essais de traction

Ces essais permettent de déterminer les contraintes d'élasticité et les propriétés à la rupture ; ceux effectués sur les mélanges cuits sont réalisés conformément à la norme AFNOR-NF-T46-002 de septembre 1988.

On mesure à la température de 100°C ± 2°C, et dans les conditions normales d'hygrométrie (50 ± 5% d'humidité relative), selon la norme française NF T 40-101 (décembre 1979), les contraintes à la rupture (en MPa) et les allongements à la rupture (en %) sont également mesurés, l'énergie à la rupture (Energie Rupture) étant le produit de la contrainte à la rupture et de l'allongement à la rupture.

### Déchirabilité

Les indices de déchirabilité sont mesurés à 100°C. On détermine notamment la force à exercer pour obtenir la rupture (FRD, en N/mm) et on mesure la déformation à rupture (DRD, en %) sur une éprouvette de dimensions 10 x 85 x 2,5 mm entaillée au centre de sa longueur par 3 entailles sur une profondeur de 5 mm, pour provoquer la rupture de l'éprouvette. Ainsi on peut déterminer l'énergie pour provoquer la rupture (Energie) de l'éprouvette qui est le produit du FRD et DRD.

### II. DESCRIPTION DETAILLEE DE L'INVENTION

La présente invention concerne une composition de caoutchouc à base d'au moins un copolymère de butadiène-styrène, SBR, le SBR ayant un taux supérieur ou égal à 50 parties pour cent parties d'élastomère, pce, une charge renforçante comprenant majoritairement du noir de carbone de surface spécifique CTAB supérieure ou égale à 90 m2/g, caractérisé en ce que la composition comprend une résine plastifiante dicyclopentadiène aromatique comprenant essentiellement des motifs styrène, éthylène et dicyclopentadiène, avec un taux allant de 2 à 40 pce, la composition contenant moins de 5 pce d'un autre plastifiant.

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Dans la présente description, sauf indication expresse différente, tous les pourcentages (%) indiqués sont des pourcentages (%) en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### Elastomère diénique

Par élastomère (ou indistinctement caoutchouc) "diénique", qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a)- tout homopolymère d'un monomère diène conjugué, notamment tout homopolymère obtenu par polymérisation d'un monomère diène conjugué ayant de 4 à 12 atomes de carbone;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d)- un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

La matrice élastomérique de la composition conforme à l'invention comprend au moins un SBR avec un taux supérieur ou égal à 50, de préférence avec un taux allant de 60 à 100 pce, plus préférentiellement de 80 à 100 pce.

Il peut avantageusement être utilisé en coupage avec un ou plusieurs autres élastomères diéniques, notamment choisi dans le groupe constitué par les polybutadiènes, les polyisoprènes synthétiques, le caoutchouc naturel, les copolymères de butadiène, les copolymères d'isoprène et les mélanges de ces élastomères.

En particulier le SBR peut être utilisé en coupage avec du caoutchouc naturel ou un polyisoprène de synthèse présent avec un taux allant de 1 à 40 pce, et préférentiellement allant de 5 à 25 pce.

Les élastomères précités peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752).

On peut aussi citer comme élastomères fonctionnels ceux préparés par l'utilisation d'un amorceur fonctionnel, notamment ceux portant une fonction amine ou étain (voir par exemple WO 2010072761).

Comme autres exemples d'élastomères fonctionnalisés, on peut citer également des élastomères (tels que SBR, BR, NR ou IR) du type époxydés.

On notera que le SBR peut être préparé en émulsion ("ESBR") ou en solution ("SSBR »). Qu'il s'agisse de ESBR ou de SSBR, on utilise notamment un SBR ayant une teneur en styrène moyenne, par exemple comprise entre 10% et 35% en poids, ou une teneur en styrène élevée, par exemple de 35 à 55%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 65°C, de préférence supérieure ou égale à -50°C.

La composition selon l'invention peut contenir un ou plusieurs élastomères synthétiques autres que diénique, voire avec des polymères autres que des élastomères, par exemple des polymères thermoplastiques.

### Charge renforçante

Dans le présent exposé, La surface spécifique CTAB est déterminée selon la norme française NF T 45-007 de novembre 1987 (méthode B).

La composition de l'invention comporte au moins une charge renforçante comprenant majoritairement c'est-à-dire à un taux supérieur ou égal à 50 % en masse, du noir de carbone dit « fin » c'est-à-dire ayant une surface spécifique CTAB supérieure ou égale à 90 m2/g.

Parmi ces derniers, on citera plus particulièrement les noirs de carbone renforçants des séries 100, 200 (grades ASTM), comme par exemple les noirs N115, N134, N234.

Bien entendu, convient pour l'invention un coupage de deux noirs de carbones ayant les caractéristiques précités.

Peuvent également convenir des noirs ayant une structure dite « basse », c'est-à-dire ayant un indice COAN inférieur à 95ml/g.

On notera que l'indice d'absorption d'huile par des d'échantillons comprimés de noir de carbone (COAN) est une mesure de la capacité du noir de carbone à absorber des liquides. Cette propriété est elle-même fonction de la structure du noir de carbone. L'indice COAN est déterminé en utilisant la norme ISO 4656/2012 à l'aide d'un absorptiomètre, avec des d'échantillons comprimés de noir de carbone.

On notera que les noirs de carbone pourraient être par exemple déjà incorporés au SBR ou au NR le cas échéant, notamment isoprénique sous la forme d'un mélange maître, couramment appelé « masterbatch », réalisé par voie sèche ou liquide (voir par exemple demandes WO 97/36724 ou WO 99/16600).

Ce noir de carbone constitue avantageusement plus de 60 % en masse de la charge renforçante totale, de préférence plus de 70 % et de façon encore plus préférentielle 90% en masse de la charge renforçante totale de la composition.

Le noir de carbone peut avantageusement représenter la seule charge renforçante de la composition.

Selon une variante de réalisation de l'invention, le noir de carbone ayant la surface spécifique CTAB précitée peut être utilisé en coupage avec une autre charge renforçante minoritaire dans un taux compris préférentiellement entre 1 et 10 pce. Cette autre charge renforçante peut être constituée par tout type de charge dite renforçante, connue pour ses capacités à renforcer une composition de caoutchouc utilisable pour la fabrication de pneumatiques.

Par exemple une autre charge organique telle qu'un autre noir de carbone, des charges organiques de polyvinylaromatique fonctionnalisé telles que décrites dans les demandes WO-A-2006/069792 et WO-A-2006/069793, une charge inorganique renforçante telle que de la silice à laquelle est associé de manière connue un agent de couplage, ou encore un mélange de ces différentes charges.

Ainsi par "charge inorganique", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("non-black filler") par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement. Une telle charge se caractérise généralement par la présence de groupes fonctionnels, notamment hydroxyle (OH), à sa surface, nécessitant pour être utilisée à titre de charge renforçante l'emploi d'un agent ou système de couplage destiné à assurer une liaison chimique stable entre l'élastomère isoprénique et ladite charge.

Une telle charge inorganique peut donc être utilisée avec un agent de couplage pour permettre le renforcement de la composition de caoutchouc dans laquelle elle est comprise. Elle peut également être utilisée avec un agent de recouvrement (qui n'assure pas de liaison entre la charge et la matrice élastomérique) en complément d'un agent de couplage ou non (dans ce cas la charge inorganique ne joue pas de rôle de renforcement).

L'état physique sous lequel se présente la charge inorganique est indifférent, que ce soit sous forme de poudre, de microperles, de granulés, de billes ou toute autre forme densifiée appropriée. Bien entendu on entend également par charge inorganique des mélanges de différentes charges inorganiques, en particulier de charges siliceuses et/ou alumineuses hautement dispersibles telles que décrites ci-après.

Comme charges inorganiques conviennent notamment des charges minérales du type siliceuse, en particulier de la silice (SiO2), ou du type alumineuse, en particulier de l'alumine (Al2O3). La silice utilisée peut être toute silice connue de l'homme du métier, notamment toute silice précipitée ou pyrogénée présentant une surface BET ainsi qu'une surface spécifique CTAB toutes deux inférieures à 450 m²/g, de préférence de 30 à 400 m2/g. A titres de silices précipitées hautement dispersibles (dites "HDS"), on citera par exemple les silices « Ultrasil 7000 » et « Ultrasil 7005 » de la société Evonik, les silices «Zeosil 1165MP, 1135MP et 1115MP» de la société Rhodia, la silice «Hi-Sil EZ150G» de la société PPG, les silices « Zeopol 8715, 8745 et 8755 » de la Société Huber, les silices à haute surface spécifique telles que décrites dans la demande WO 03/16837.

La surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative p/po : 0.05 à 0.17).

On peut également envisager l'ajout au noir de carbone spécifique de la composition, d'autres charges minoritairement, de préférence avec un taux inférieur ou égal à 10 pce, telles que des noirs de carbone partiellement ou intégralement recouverts de silice par un post traitement, ou les noirs de carbone modifiés in situ par de la silice tels que, à titre non limitatif, les charges qui commercialisées par la société Cabot Corporation sous la dénomination EcoblackTM « CRX 2000» ou « CRX4000 ».

De manière préférentielle, le taux de charge totale (noir de carbone et autres charges le cas échéant) est compris entre 20 et 150 pce et plus préférentiellement entre 20 et 100 pce.

Le noir de carbone selon l'invention est présent avec un taux variant de 20 à 90 pce, plus préférentiellement de 30 à 80 pce et encore plus préférentiellement de 45 à 65 pce.

### Résine plastifiante

De manière connue de l'homme du métier, la dénomination "résine plastifiante" est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé, typiquement supérieur à 5 pce) avec la composition de caoutchouc à laquelle il est destiné, de manière à agir comme un véritable agent diluant.

Les résines hydrocarbonées sont des polymères bien connus de l'homme du métier, miscibles par nature dans les compositions d'élastomère(s) diénique(s) lorsqu'elles sont qualifiées en outre de "plastifiantes". Elles ont été décrites par exemple dans l'ouvrage intitulé *"Hydrocarbon Resins"* de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods"*). Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

La température de transition vitreuse Tg est mesurée de manière connue par DSC (*Differential Scanning Calorimetry*)*,* selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Il est connu d'utiliser dans des compositions de caoutchouc pour pneumatiques des résines plastifiantes hydrocarbonées ayant au moins une quelconque des caractéristiques suivantes :
- une Tg supérieure à 20°C, plus préférentiellement supérieure à 30°C ;
- une masse moléculaire moyenne en nombre (Mn) comprise entre 400 et 2000 g/mol,
- un indice de polymolécularité (Ip) inférieur à 4, préférentiellement inférieur à 3 (rappel : Ip = Mw/Mn avec Mw masse moléculaire moyenne en poids).

Plus préférentiellement, cette résine plastifiante hydrocarbonée présente l'ensemble des caractéristiques préférentielles ci-dessus.

Et en particulier, il est connu de choisir ces résines plastifiantes parmi le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

La demanderesse a découvert que parmi ces résines plastifiantes dicyclopentadiènes aromatiques, les résines dicyclopentadiènes comprenant essentiellement des motifs styrène, éthylène et dicyclopentadiène, utilisées dans des compositions à base majoritairement de SBR et contenant du noir de carbone de surface spécifique CTAB supérieure ou égale à 90 m²/g, permettaient de façon étonnante de permettre l'obtention de propriétés améliorées.

On entend par « essentiellement », le fait que les résines comprennent au moins 80% de motifs choisis parmi les motifs styrène, éthylène et dicyclopentadiène.

Plus préférentiellement encore les résines plastifiantes dicyclopentadiènes aromatiques convenant pour l'invention comprennent au moins 90% de motifs choisis parmi les motifs styrène, éthylène et dicyclopentadiène.

A titre d'exemples de résines conformes à l'invention, des résines plastifiantes dicyclopentadiènes aromatiques ayant un taux de motifs dicyclopentadiène compris entre 10 et 30% telles que notamment des résines commerciales «Novares TC160» (Mn=710g/mol ; Mw=2000g/mol ; Ip=2,8, Tg=106°C), «Novares TC100» (Mn=460g/mol ; Mw=840g/mol ; Ip=1,8, Tg=42°C) commercialisées par la société Rütgers.

Le taux de résine dicyclopentadiène aromatique va préférentiellement de 2 à 40 pce. Préférentiellement le taux de résine dicyclopentadiène aromatique va de 2 à 20 pce lorsque la composition de caoutchouc comprend un taux de noir de carbone conforme à l'invention, inférieur ou égal à 65 pce, plus préférentiellement le taux de résine plastifiante va de 4 à 15 pce, et encore plus préférentiellement de 5 à 13 pce.

En dessous du minimum indiqué, l'effet technique visé peut s'avérer insuffisant, alors qu'au-delà de la limite supérieure, le compromis de propriétés visé pour la composition de caoutchouc considérée n'est plus atteint.

### Système de réticulation

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

### Additifs divers

Les compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des agents de protection tels que cires anti-ozone, anti-ozonants chimiques, anti-oxydants, des agents anti-fatigue, des résines tackifiantes, des agents de mise en oeuvre tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation.

Cependant la composition de caoutchouc conforme à l'invention ne peut comprendre un plastifiant autre que la résine plastifiante dicyclopentadiène aromatique, qu'avec un taux de moins de 5 pce, de préférence moins de 2 pce, préférentiellement moins de 1pce. Encore plus préférentiellement, la composition de caoutchouc conforme à l'invention est dépourvue de plastifiant autre que la résine plastifiante dicyclopentadiène aromatique.

A la charge renforçante précédemment décrite, peuvent être également ajoutés, en fonction de l'application visée, des charges inertes (i.e., non renforçantes) telles que particules d'argile, bentonite, talc, craie, kaolin avec un taux inférieur ou égal à 10 pce et préférentiellement inférieur ou égal à 5 pce.

### Fabrication des compositions de caoutchouc

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

### III- EXEMPLES DE REALISATION DE L'INVENTION

Les exemples qui suivent permettent d'illustrer l'invention, cette dernière ne saurait cependant être limitée à ces seuls exemples.

### III-1 Préparation des compositions de caoutchouc.

On procède pour les essais qui suivent de la manière suivante: on introduit dans un mélangeur interne, rempli à 70% et dont la température initiale de cuve est d'environ 90°C, le SBR, le noir de carbone puis, après une à deux minutes de malaxage, les divers autres ingrédients, et notamment la résine plastifiante le cas échéant, à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute l'agent de recouvrement (lorsque ce dernier est présent) et le système de vulcanisation (soufre et accélérateur sulfénamide) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) de caoutchouc pour la mesure de leurs propriétés physiques ou mécaniques.

### III-2 Essai 1

Cet essai a pour but de démontrer les propriétés améliorées de compositions de caoutchouc conformes à l'invention comparées à des compositions non conformes dépourvues de résine plastifiante ou utilisant uniquement des résines plastifiantes autres que des résines dicyclopentadiènes aromatiques.

On compare pour cela 9 compositions à base de 100 pce de SBR renforcées de noir de carbone N134, ces compositions différant les unes des autres essentiellement par les caractéristiques techniques qui suivent :
- la composition C1 est une composition témoin ne comportant pas de résine plastifiante,
- la composition C2 non-conforme à l'invention comprend 6 pce d'une résine plastifiante résine polylimonène (Tg=72°C),
- la composition C'2 non-conforme à l'invention comprend 12 pce de résine polylimonène identique à celle de la composition C2,
- la composition C3 non-conforme à l'invention comprend 6 pce d'une résine plastifiante résine polylimonène (Tg= 44°C),
- la composition C'3 non-conforme à l'invention comprend 12 pce de résine polylimonène identique à celle de la composition C3,
- la composition C4 conforme à l'invention comprend 6 pce d'une résine dicyclopentadiène aromatique (Tg= 106°C),
- la composition C'4 conforme à l'invention comprend 12 pce de résine identique à celle de la composition C4,
- la composition C5 conforme à l'invention comprend 6 pce d'une résine dicyclopentadiène aromatique (Tg= 42°C),
- la composition C'5 conforme à l'invention comprend 12 pce de résine identique à celle de la composition C5.

Les tableaux 1 et 2 donnent la formulation des différentes compositions (tableau 1 - taux des différents produits exprimés en pce) ainsi que leurs propriétés après cuisson, environ 40 min à 150°C (tableau 2); le système de vulcanisation est constitué par soufre et sulfénamide.

Au vu du tableau 2, il apparaît clairement que l'ensemble des compositions contenant une résine plastifiante permettent d'améliorer les propriétés aux limites de compositions (déchirabilité ou rupture) en comparaison à la composition témoin C1.

Cependant il apparaît de façon étonnante que les compositions conformes à l'invention C4 et C5 permettent une amélioration très significativement supérieure par rapport aux compositions C2 et C3 :
- augmentation pour l'Energie Rupture de l'ordre de 20-22 % pour les compositions C2 et C3 par rapport à la composition C1, et augmentation de 30-35 % pour les compositions C4 et C5 conformes à l'invention par rapport à la composition C1 ;
- augmentation pour l'Energie de 23 % pour les compositions C2 et C3 par rapport à la composition C1, et augmentation de 50 % pour les compositions C4 et C5 conformes à l'invention par rapport à la composition C1.

On constate sur les compositions C' (incluant 12 pce de résine) que cet écart est encore plus marqué pour les Energies Ruptures et Energies.

Or cet effet est d'autant plus surprenant qu'on ne peut pas faire de lien avec la Tg de ces différentes résines mais uniquement avec leur structure chimique.

### III-3 Essai 2

Cet essai a pour but de démontrer les propriétés améliorées de compositions de caoutchouc conformes à l'invention comparées à des compositions non conformes dépourvues de résine plastifiante ou utilisant uniquement des résines plastifiantes autres que des résines dicyclopentadiènes aromatiques, avec un autre noir de carbone de surface spécifique CTAB supérieur ou égale à 90 m²/g, de grade distinct de l'essai 1.

Les 9 compositions de cet essai se distinguent essentiellement par les caractéristiques techniques suivantes :
On compare pour cela 9 compositions à base de 100 pce de SBR renforcées de noir de carbone N234, ces compositions différant les unes des autres essentiellement par les caractéristiques techniques qui suivent :
- la composition C6 est une composition témoin ne comportant pas de résine plastifiante,
- la composition C7 non-conforme à l'invention comprend 6 pce d'une résine plastifiante résine polylimonène (Tg=72°C),
- la composition C'7 non-conforme à l'invention comprend 12 pce de résine polylimonène identique à celle de la composition C7,
- la composition C8 non-conforme à l'invention comprend 6 pce d'une résine plastifiante résine polylimonène (Tg= 44°C),
- la composition C'8 non-conforme à l'invention comprend 12 pce de résine polylimonène identique à celle de la composition C8,
- la composition C9 conforme à l'invention comprend 6 pce d'une résine dicyclopentadiène aromatique (Tg= 106°C),
- la composition C'9 conforme à l'invention comprend 12 pce de résine identique à celle de la composition C9,
- la composition C10 conforme à l'invention comprend 6 pce d'une résine dicyclopentadiène aromatique (Tg= 42°C),
- la composition C'10 conforme à l'invention comprend 12 pce de résine identique à celle de la composition C10.

Les tableaux 3 et 4 donnent la formulation des différentes compositions (tableau 3 - taux des différents produits exprimés en pce) ainsi que leurs propriétés après cuisson, environ 40 min à 150°C (tableau 4); le système de vulcanisation est constitué par soufre et sulfénamide.

On constate au vu du tableau 4, le même phénomène que celui observé dans l'essai 1 avec un noir de carbone d'un grade différent.

Ainsi ces exemples montrent que l'utilisation dans une composition de caoutchouc de charges renforçantes fines, noir de carbone de surface spécifique CTAB supérieure ou égale à 90 m2/g, associées à un type de résine plastifiante spécifique, résine plastifiante dicyclopentadiène aromatique, permettait d'améliorer de façon significative et surprenant les propriétés aux limites de ces compositions.

**Tableau 1**

| **Compositions** | **C1** | **C2** | **C'2** | **C3** | **C'3** | **C4** | **C'4** | **C5** | **C'5** |
|---|---|---|---|---|---|---|---|---|---|
| SBR(1) | 100 | 100 | 100 | 100 | 100 | 100 | 100 | 100 | 100 |
| Noir de carbone (2) | 55 | 55 | 55 | 55 | 55 | 55 | 55 | 55 | 55 |
| Résine plastifiante (3) | - | 6 | 12 | - | - | - | - | - | - |
| Résine plastifiante (4) | - | - | - | 6 | 12 | - | - | - | - |
| Résine plastifiante (5) | - | - | - | - | - | 6 | 12 | - | - |
| Résine plastifiante (6) | - | - | - | - | - | - | - | 6 | 12 |
| Anti-oxydant (7) | 1,5 | 1,5 | 1,5 | 1,5 | 1,5 | 1,5 | 1,5 | 1,5 | 1,5 |
| Oxyde de Zinc (8) | 2 | 2 | 2 | 2 | 2 | 2 | 2 | 2 | 2 |
| Acide stéarique (9) | 0,5 | 0,5 | 0,5 | 0,5 | 0,5 | 0,5 | 0,5 | 0,5 | 0,5 |
| Soufre | 1,3 | 1,3 | 1,3 | 1,3 | 1,3 | 1,3 | 1,3 | 1,3 | 1,3 |
| Accélérateur (10) | 1,3 | 1,3 | 1,3 | 1,3 | 1,3 | 1,3 | 1,3 | 1,3 | 1,3 |

| | | | | | | | | | |
|---|---|---|---|---|---|---|---|---|---|
| (1) SSBR avec 25% de styrène, 27% de motifs polybutadiène 1-2 et 48% de motifs polybutadiène 1-4 trans (Tg = -48°C) ; taux exprimé en SBR sec (SBR étendu avec 9% d'huile MES, soit un total de SSBR + huile égal à 76 pce) ; (2) N134 commercialisé par la société Cabot Corporation (CTAB 130m²/g) ; (3) résine polylimonène « SYLVARES 7125 » (Tg=72°C, Temp. de ramolissement = 120°C) commercialisée par la société ARIZONA ; (4) résine polylimonène (« Resine THER 8644 » de la société Cray Valley); (5) résine « Novares TC160 » (Mn=710g/mol ; Mw=2000g/mol ; Ip=2,8, Tg=106°C) commercialisée par la société Rütgers; (6) résine « Novares TC100 » (Mn=460g/mol ; Mw=840g/mol ; Ip=1,8, Tg=42°C) commercialisée par la société Rütgers; (7) N-1,3-diméthylbutyl-N-phényl-para-phénylènediamine ("Santoflex 6-PPD" de la société Flexsys) ; (8) oxyde de zinc (grade industriel - société Umicore) ; (9) stéarine ("Pristerene 4931" - société Uniqema) ; (10) N-cyclohexyl-2-benzothiazyl-sulfénamide ("Santocure CBS" de la société Flexsys). | | | | | | | | | |

**Tableau 2**

| **Compositions** | **C1** | **C2** | **C'2** | **C3** | **C'3** | **C4** | **C'4** | **C5** | **C'5** |
|---|---|---|---|---|---|---|---|---|---|
| Allongement rupture (%) | 419 | 513 | 579 | 506 | 565 | 542 | 710 | 566 | 784 |
| Contrainte rupture (MPa) | 14 | 13 | 13 | 13 | 12 | 13 | 11 | 13 | 12 |
| Energie Rupture | 57 | 68 | 74 | 64 | 66 | 70 | 81 | 71 | 90 |
| DRD (%) | 199 | 248 | 264 | 251 | 284 | 283 | 502 | 293 | 465 |
| FRD (N/mm) | 47,0 | 46,3 | 41,4 | 46,0 | 42,8 | 50,1 | 61,7 | 47,6 | 51,7 |
| Energie | 93 | 115 | 109 | 115 | 122 | 142 | 310 | 139 | 240 |

**Tableau 3**

| **Compositions** | **C6** | **C7** | **C'7** | **C8** | **C'8** | **C9** | **C'9** | **C10** | **C'10** |
|---|---|---|---|---|---|---|---|---|---|
| SBR (1) | 100 | 100 | 100 | 100 | 100 | 100 | 100 | 100 | 100 |
| Noir de carbone (11) | 55 | 55 | 55 | 55 | 55 | 55 | 55 | 55 | 55 |
| Résine plastifiante (3) | - | 6 | 12 | - | - | - | - | - | - |
| Résine plastifiante (4) | - | - | - | 6 | 12 | - | - | - | - |
| Résine plastifiante (5) | - | - | - | - | - | 6 | 12 | - | - |
| Résine plastifiante (6) | - | - | - | - | - | - | - | 6 | 12 |
| Anti-oxydant (7) | 1,5 | 1,5 | 1,5 | 1,5 | 1,5 | 1,5 | 1,5 | 1,5 | 1,5 |
| Oxyde de Zinc (8) | 2 | 2 | 2 | 2 | 2 | 2 | 2 | 2 | 2 |
| Acide stéarique (9) | 0,5 | 0,5 | 0,5 | 0,5 | 0,5 | 0,5 | 0,5 | 0,5 | 0,5 |
| Soufre | 1,3 | 1,3 | 1,3 | 1,3 | 1,3 | 1,3 | 1,3 | 1,3 | 1,3 |
| Accélérateur (10) | 1,3 | 1,3 | 1,3 | 1,3 | 1,3 | 1,3 | 1,3 | 1,3 | 1,3 |

| | | | | | | | | | |
|---|---|---|---|---|---|---|---|---|---|
| (11) N234 commercialisé par la société Cabot Corporation (CTAB 115m²/g) | | | | | | | | | |

**Tableau 4**

| **Compositions** | **C6** | **C7** | **C'7** | **C8** | **C'8** | **C9** | **C'9** | **C10** | **C'10** |
|---|---|---|---|---|---|---|---|---|---|
| Allongement rupture (%) | 417 | 518 | 575 | 488 | 565 | 619 | 778 | 595 | 769 |
| Contrainte rupture (MPa) | 14 | 14 | 12 | 13 | 12 | 13 | 12 | 13 | 12 |
| Energie Rupture | 58 | 70 | 70 | 63 | 67 | 82 | 92 | 79 | 92 |
| DRD (%) | 210 | 263 | 272 | 240 | 279 | 294 | 499 | 289 | 449 |
| FRD (N/mm) | 53,3 | 54,3 | 45,4 | 48,2 | 44,7 | 50,1 | 57,9 | 50,9 | 57,4 |
| Energie | 112 | 143 | 124 | 116 | 125 | 147 | 289 | 147 | 258 |

## Revendications

1. Composition de caoutchouc à base d'au moins un copolymère de butadiène-styrène, SBR, le SBR ayant un taux supérieur ou égal à 50 parties pour cent parties d'élastomère, pce, une charge renforçante comprenant majoritairement du noir de carbone de surface spécifique CTAB déterminée selon la norme française NF T 45-007 de novembre 1987 (méthode B), supérieure ou égale à 90 m²/g, **caractérisé en ce que** la composition comprend une résine plastifiante dicyclopentadiène aromatique comprenant essentiellement des motifs styrène, éthylène et dicyclopentadiène, c'est-à-dire comprenant au moins 80% de motifs choisis parmi les motifs styrène, éthylène et dicyclopentadiène, avec un taux allant de 2 à 40 pce, la composition contenant moins de 5 pce d'un autre plastifiant.

2. Composition selon la revendication 1, dans laquelle le taux de SBR va de 60 à 100 pce, de préférence de 80 pce à 100 pce.

3. Composition selon l'une quelconque des revendications 1 ou 2, dans lequel le SBR est utilisé en coupage avec au moins un autre élastomère diénique.

4. Composition selon la revendication 3, dans laquelle l'autre élastomère diénique est choisi dans le groupe constitué par les polybutadiènes, les polyisoprènes synthétiques, le caoutchouc naturel, les copolymères de butadiène, les copolymères d'isoprène et les mélanges de ces élastomères.

5. Composition selon l'une quelconque des revendications 1 ou 2, dans laquelle le SBR est utilisé en coupage avec du caoutchouc naturel ou du polyisoprène de synthèse présent avec un taux allant de 1 à 40 pce, de préférence de 5 à 25 pce.

6. Composition selon l'une quelconque des revendications précédentes, dans laquelle le noir de carbone représente plus de 60 % en masse du total de la charge renforçante.

7. Composition selon la revendication 6, dans laquelle le noir de carbone représente plus de 90% en masse du total de la charge renforçante.

8. Composition selon la revendication 7, dans laquelle le noir de carbone est la seule charge renforçante.

9. Composition selon l'une quelconque des revendications précédentes, dans laquelle le taux total de charge renforçante va de 20 à 90 pce.

10. Composition selon la revendication 9, dans laquelle le taux total de charge renforçante va de 30 à 80 pce, de préférence de 45 à 65 pce.

11. Composition selon l'une quelconque des revendications précédentes, dans laquelle la résine plastifiante dicyclopentadiène aromatique comprend au moins 90% en masse de motifs choisis parmi les motifs styrène, éthylène et dicyclopentadiène.

12. Composition selon l'une quelconque des revendications précédentes, dépourvue de plastifiant autre que la résine plastifiante dicyclopentadiène aromatique.

13. Composition selon l'une quelconque des revendications précédentes, dans laquelle le taux de noir de carbone est inférieur ou égal à 65 pce et le taux de résine dicyclopentadiène aromatique va de 2 à 20 pce.

14. Composition selon la revendication 13, dans laquelle le taux de résine plastifiante va de 4 à 15 pce, de préférence de 5 à 13 pce.

15. Pneumatique comprenant une composition de caoutchouc selon l'une quelconque des revendications précédentes.

## Patentansprüche

1. Kautschukzusammensetzung auf Basis von mindestens einem Styrol-Butadien-Copolymer, SBR, wobei das SBR einen Gehalt größer oder gleich 50 Teilen pro hundert Gewichtsteile Elastomer, phe, eines verstärkenden Füllstoffs, der hauptsächlich Ruß mit einer gemäß der französischen Norm NF T 45-007 vom November 1987 (Methode B) bestimmten spezifischen CTAB-Oberfläche größer oder gleich 90 m²/g umfasst, aufweist, **dadurch gekennzeichnet, dass** die Zusammensetzung ein aromatisches Dicyclopentadien-Weichmacherharz, das im Wesentlichen Styrol-, Ethylen- und Dicyclopentadien-Einheiten umfasst, d. h. mindestens 80 % aus Styrol-, Ethylen- und Dicyclopentadien-Einheiten ausgewählte Einheiten umfasst, in einem Gehalt im Bereich von 2 bis 40 phe umfasst, wobei die Zusammensetzung weniger als 5 phe eines anderen Weichmachers enthält.

2. Zusammensetzung nach Anspruch 1, wobei der SBR-Gehalt im Bereich von 60 bis 100 phe, vorzugsweise von 80 phe bis 100 phe, liegt.

3. Zusammensetzung nach Anspruch 1 oder 2, wobei das SBR in Abmischung mit mindestens einem anderen Dienelastomer verwendet wird.

4. Zusammensetzung nach Anspruch 3, wobei das andere Dienelastomer aus der Gruppe bestehend aus Polybutadienen, synthetischen Polyisoprenen, Naturkautschuk, Butadien-Copolymeren, Isopren-Copolymeren und Mischungen dieser Elastomere ausgewählt ist.

5. Zusammensetzung nach Anspruch 1 oder 2, wobei das SBR in Abmischung mit Naturkautschuk oder synthetischem Polyisopren, der bzw. das in einer Menge im Bereich von 1 bis 40 phe, vorzugsweise von 5 bis 25 phe, vorliegt, verwendet wird.

6. Zusammensetzung nach einem der vorhergehenden Ansprüche, wobei der Ruß mehr als 60 Massen-% der Gesamtheit des verstärkenden Füllstoffs ausmacht.

7. Zusammensetzung nach Anspruch 6, wobei der Ruß mehr als 90 Massen-% der Gesamtheit des verstärkenden Füllstoffs ausmacht.

8. Zusammensetzung nach Anspruch 7, wobei es sich bei dem Ruß um den einzigen verstärkenden Füllstoff handelt.

9. Zusammensetzung nach einem der vorhergehenden Ansprüche, wobei der Gesamtgehalt von verstärkendem Füllstoff 20 bis 90 phe beträgt.

10. Zusammensetzung nach Anspruch 9, wobei der Gesamtgehalt von verstärkendem Füllstoff 30 bis 80 phe, vorzugsweise 45 bis 65 phe, beträgt.

11. Zusammensetzung nach einem der vorhergehenden Ansprüche, wobei das aromatische Dicyclopentadien-Weichmacherharz mindestens 90 Massen-% aus Styrol-, Ethylen- und Dicyclopentadien-Einheiten ausgewählte Einheiten umfasst.

12. Zusammensetzung nach einem der vorhergehenden Ansprüche, die frei von Weichmacher ist, der von dem aromatischen Dicyclopentadien-Weichmacherharz verschieden ist.

13. Zusammensetzung nach einem der vorhergehenden Ansprüche, wobei der Gehalt von Ruß kleiner oder gleich 65 phe ist und der Gehalt von aromatischem Dicyclopentadien-Weichmacherharz 2 bis 20 phe beträgt.

14. Zusammensetzung nach Anspruch 13, wobei der Gehalt von aromatischem Dicyclopentadien-Weichmacherharz 4 bis 15 phe, vorzugsweise 5 bis 13 phe, beträgt.

15. Reifen, umfassend eine Kautschukzusammensetzung nach einem der vorhergehenden Ansprüche.

## Claims

1. Rubber composition based on at least one styrene/butadiene copolymer SBR, the SBR having a content of greater than or equal to 50 parts per hundred parts of elastomer, phr, a reinforcing filler comprising predominantly carbon black with a CTAB specific surface area determined according to French Standard NF T 45-007 of November 1987 (method B), of greater than or equal to 90 m²/g, **characterized in that** the composition comprises an aromatic dicyclopentadiene plasticizing resin comprising essentially styrene, ethylene and dicyclopentadiene units, that is to say comprising at least 80% of units selected from styrene, ethylene and dicyclopentadiene units, at a content ranging from 2 to 40 phr, the composition containing less than 5 phr of another plasticizer.

2. Composition according to Claim 1, in which the SBR content ranges from 60 to 100 phr, preferably from 80 phr to 100 phr.

3. Composition according to either one of Claims 1 and 2, in which the SBR is used in a blend with at least one other diene elastomer.

4. Composition according to Claim 3, in which the other diene elastomer is selected from the group consisting of polybutadienes, synthetic polyisoprenes, natural rubber, butadiene copolymers, isoprene copolymers and the mixtures of these elastomers.

5. Composition according to either one of Claims 1 and 2, in which the SBR is used in a blend with natural rubber or synthetic polyisoprene, present at a content ranging from 1 to 40 phr, preferably from 5 to 25 phr.

6. Composition according to any one of the preceding claims, in which the carbon black represents more than 60% by weight of the sum total of reinforcing filler.

7. Composition according to Claim 6, in which the carbon black represents more than 90% by weight of the sum total of reinforcing filler.

8. Composition according to Claim 7, in which the carbon black is the only reinforcing filler.

9. Composition according to any one of the preceding claims, in which the total content of reinforcing filler ranges from 20 to 90 phr.

10. Composition according to Claim 9, in which the total content of reinforcing filler ranges from 30 to 80 phr, preferably from 45 to 65 phr.

11. Composition according to any one of the preceding claims, in which the aromatic dicyclopentadiene plasticizing resin comprises at least 90% by weight of units selected from styrene, ethylene and dicyclopentadiene units.

12. Composition according to any one of the preceding claims, devoid of plasticizer other than the aromatic dicyclopentadiene plasticizing resin.

13. Composition according to any one of the preceding claims, in which the content of carbon black is less than or equal to 65 phr, and the content of aromatic dicyclopentadiene resin ranges from 2 to 20 phr.

14. Composition according to Claim 13, in which the content of plasticizing resin ranges from 4 to 15 phr, preferably from 5 to 13 phr.

15. Tyre comprising a rubber composition according to any one of the preceding claims.
